# EUROPEAN PATENT APPLICATION

(11) **EP 4 765 608 A1**
(43) Date of publication of application: **24.06.2026**
(21) Application number: 25178935.0
(22) Date of filing: 27.05.2025
(51) Int. Cl.: H02M 1/32, H02M 1/36, H02M 7/12

(54) **POWER SUPPLY AND OPERATION METHOD THEREOF**

(30) Priority: 17.12.2024 CN 202411859129
(71) Applicant: Delta Electronics, Inc., Taoyuan City 333 (TW)
(72) Inventor: CHEN, Sheng-Jian, 333 Taoyuan City (TW); CHEN, Chan-Yi, 333 Taoyuan City (TW); KO, Chi-You, 333 Taoyuan City (TW); CHAO, Wei-Chieh, 333 Taoyuan City (TW); OU, Cheng-Chieh, 333 Taoyuan City (TW)
(74) Representative: Porta & Consulenti Associati S.p.A.

(57) **Abstract**

A power supply includes an AC-DC converter, a feedback circuit, an under voltage protection circuit, a control signal generating circuit, a voltage abnormal protection circuit and an auxiliary under voltage detection circuit. The AC-DC converter converts an AC voltage to a DC voltage. The feedback circuit generates a feedback signal according to the DC voltage. The control signal generating circuit sets the AC-DC converter to convert the AC voltage to the DC voltage. When the auxiliary under voltage detection circuit detects that a duration of the AC voltage being less than a predetermined voltage is longer than a predetermined period, the auxiliary under voltage detection circuit changes a signal value of the feedback signal, to enable the control signal generating circuit by the voltage abnormal detection circuit to set the AC-DC converter to perform a soft start procedure.

## Description

### BACKGROUND

### Field of Invention

The present invention relates to a power supply and an operation method thereof. More particularly, the present invention relates to the power supply and the operation method thereof is suitable for unstable input power.

### Description of Related Art

To decrease an inrush current generated by a power converter when it starts, soft start control is often used to gradually increase an output voltage of the power converter from an initial voltage to a predetermined voltage. However, in some environments where the AC input power is unstable, there are situations of insufficient supply voltage or power outage. If the duration of the insufficient supply voltage or the power outage is too short (which refers to an instantaneous interruption in the following description), and the power supply fails to detect the instantaneous interruption, the power supply therefore continues to operate, it may generate an inrush current which causes a load or the power converter to operate in a wrong way or even failure.

### SUMMARY

Therefore, how to provide a power supply to solve the above mentioned problems is an important issue in this field. One aspect of the present disclosure provides a power supply. The power supply is configured to supply power to a load according to an AC power source. The power supply comprises an AC-DC converter, a feedback circuit, a brown-out protection circuit, a control signal generating circuit, a voltage abnormal protection circuit and an auxiliary brown-out detection circuit. The AC-DC converter is configured to be coupled to the AC power source. The AC-DC converter converts an AC voltage to a DC voltage. The feedback circuit is coupled to the AC-DC converter. The feedback circuit correspondingly generates a first feedback signal according to the DC voltage. The brown-out protection circuit is configured to be coupled to the AC power source. The control signal generating circuit is coupled to the brown-out protection circuit and the feedback circuit. The control signal generating circuit is configured to set the AC-DC converter to convert the AC voltage to the DC voltage. The voltage abnormal protection circuit is coupled to the feedback circuit and the control signal generating circuit. The auxiliary brown-out detection circuit is coupled to the voltage abnormal protection circuit. The auxiliary brown-out detection circuit is configured to be coupled to the AC power source. When the auxiliary brown-out detection circuit detects that a duration of the AC voltage being less than a second predetermined voltage is greater than a second predetermined period, the auxiliary brown-out detection circuit changes a signal value of the first feedback signal, to enable the control signal generating circuit by the voltage abnormal protection circuit to set the AC-DC converter to perform a soft start procedure.

The other aspect of the present disclosure provides an operation method for a power supply. The power supply is configured to supply power to a load according to an AC power source. The power supply comprises an AC-DC converter, a feedback circuit, a brown-out protection circuit, a control signal generating circuit, a voltage abnormal protection circuit and an auxiliary brown-out detection circuit. The AC-DC converter is coupled to the AC power source. The control signal generating circuit is coupled to the brown-out protection circuit and the feedback circuit. The voltage abnormal protection circuit is coupled to the feedback circuit and the control signal generating circuit. The auxiliary brown-out detection circuit is coupled to the voltage abnormal protection circuit. The operation method comprises the following steps. The control signal generating circuit sets the AC-DC converter to convert an AC voltage to a DC voltage. The feedback circuit generates a first feedback signal, correspondingly. when the auxiliary brown-out detection circuit detects that a duration of the AC voltage being less than a second predetermined voltage is greater than a second predetermined period, changing a signal value of the first feedback signal, by the auxiliary brown-out detection circuit, to enable the control signal generating circuit by the voltage abnormal protection circuit to set the AC-DC converter to perform a soft start procedure.

Summary, the power supply of the present disclosure uses the auxiliary brown-out detection mechanism besides the brown-out protection mechanism of the controller, in order to ensure that the power supply can ensure the stability of the power supply and the safety of the device for use in environments with different electricity supplies.

### BRIEF DESCRIPTION OF THE DRAWINGS

The present disclosure can be more fully understood by reading the following detailed description of the embodiment, with reference made to the accompanying drawings as follows.
Fig. 1 depicts a schematic diagram of a power supply according to some embodiments of the present disclosure.
Fig. 2 depicts a schematic diagram of a portion of a circuit in Fig. 1 according to an embodiment of the present disclosure.
Fig. 3 depicts a schematic diagram of an output voltage and a control signal under the soft start control according to some embodiments of the present disclosure.

### DETAILED DESCRIPTION

Reference will now be made in detail to embodiments of the present disclosure, examples of which are described herein and illustrated in the accompanying drawings. While the disclosure will be described in conjunction with embodiments, it will be understood that they are not intended to limit the disclosure to these embodiments. Description of the operation does not intend to limit the operation sequence. Any structures resulting from recombination of elements with equivalent effects are within the scope of the present disclosure. It is noted that, in accordance with the standard practice in the industry, the drawings are only used for understanding and are not drawn to scale. Hence, the drawings are not meant to limit the actual embodiments of the present disclosure. In fact, the dimensions of the various features may be arbitrarily increased or reduced for clarity of discussion. Wherever possible, the same reference numbers are used in the drawings and the description to refer to the same or like parts for better understanding.

In the description herein and throughout the claims that follow, unless otherwise defined, all terms have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In the description herein and throughout the claims that follow, the terms "comprise" or "comprising," "include" or "including," "have" or "having," "contain" or "containing" and the like used herein are to be understood to be open-ended, i.e., to mean including but not limited to.

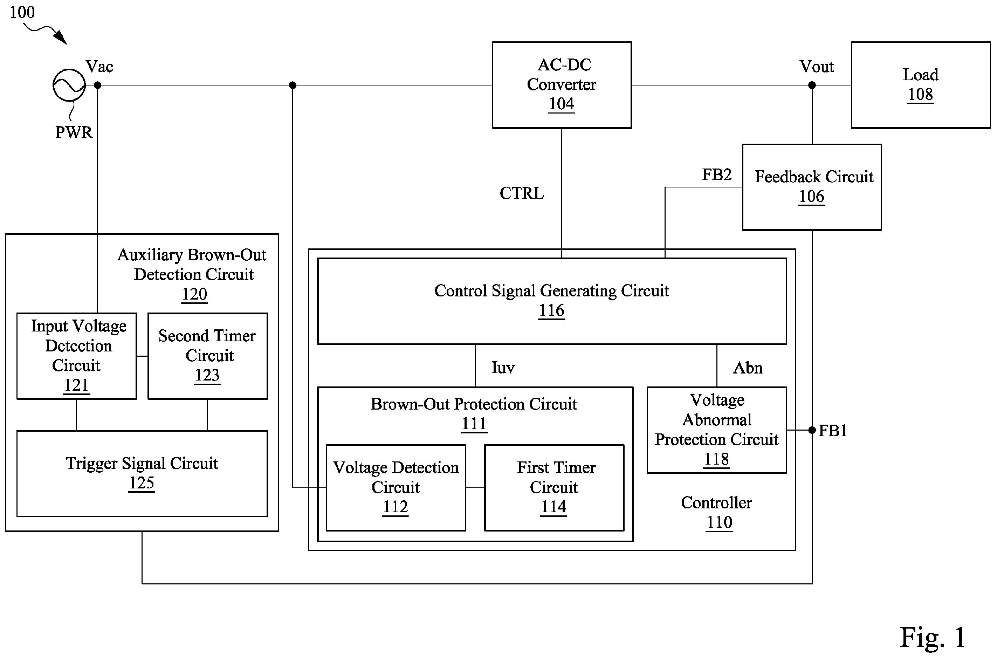

A description is provided with reference to Fig. 1. Fig. 1 depicts a schematic diagram of a power supply 100 according to some embodiments of the present disclosure. As shown in Fig. 1, the power supply 100 includes an AC-DC converter 104, a feedback circuit 106, a controller 110 and an auxiliary brown-out detection circuit 120.

The AC-DC converter 104 is electrically coupled to an AC power source PWR, in order to convert an AC voltage Vac to an output voltage Vout, thereby providing the output voltage Vout to a load 108. The load 108 can be a terminal load, and can also be circuit components included in the other power converter. The AC-DC converter 104 can be implemented by a power converter circuit with appropriate architecture, such as, a boost converter circuit, a buck converter circuit, a buck-boost converter circuit, etc. The AC-DC converter 104 includes one or more switch. The controller 110 is electrically coupled to the AC-DC converter 104, to provide one or more control signal CTRL to the AC-DC converter 104, which are able to respectively control a conduction time, a switching frequency and/or other operation states of the one or more switch, thereby converting the AC voltage Vac to an output voltage Vout. For example, the controller 110 can implement pulse width modulation (PAM), pulse frequency modulation (PFM) or other appropriate signal format as the control signal CTRL.

The feedback circuit 106 is electrically coupled to an output terminal of the AC-DC converter 104 and the controller 110, and the feedback circuit 106 is configured to provide one or more feedback signal according to the output voltage Vout and/or an output current of the AC-DC converter 104. In this embodiment, the feedback circuit 106 provides two feedback signals FB1 and FB2. The feedback signals FB1 and FB2 can be respectively implemented by a voltage, a current, a light signal, a magnetic signal or other appropriate signal format. For example, the feedback circuit 106 can include one or mode voltage divider, in order to divide the output voltage Vout to the feedback signals FB1 and FB2 with an appropriate voltage level, and to output the feedback signals FB1 and FB2 to controller 110. In this embodiment, the feedback signals FB1 and FB2 includes output voltage sensing signal Vfb, and there is a positive correlation between the output voltage sensing signal Vfb and the output voltage Vout. For example, Vfb=AxVout, where the term "A" is an appropriate value less than 1 and greater than 0. In another embodiment, the feedback signals FB1 and FB2 can include output current sensing signal. In the other embodiment, the feedback circuit 106 can provide one feedback signal as the feedback signals FB1 and FB2 to the voltage abnormal protection circuit 118 and control signal generating circuit 116.

The controller 110 includes a brown-out protection circuit 111, a voltage abnormal protection circuit 118 and control signal generating circuit 116. The brown-out protection circuit 111 includes a voltage detection circuit 112 and a timer circuit 114. The brown-out protection circuit 111 is coupled to an input terminal of the AC-DC converter 104. The voltage abnormal protection circuit 118 is coupled to the feedback circuit 106 and the auxiliary brown-out detection circuit 120. The control signal generating circuit 116 is coupled to the brown-out protection circuit 111 and the voltage abnormal protection circuit 118. The controller 110 is configured to correspondingly generate the control signal CTRL according to the AC voltage Vac and the feedback signals FB1 and FB2.

The brown-out protection circuit 111 includes a voltage detection circuit 112 and a timer circuit 114. The voltage detection circuit 112 is coupled to the AC power source PWR and the first timer circuit 114. The voltage detection circuit 112 can be implemented by a comparator or other manner, to detect whether the AC voltage Vac is less than a first predetermined voltage. The first timer circuit 114 can be implemented by an oscillator circuit, a counter circuit or other manner.

When the voltage detection circuit 112 and the timer circuit 114 detect that a duration of the AC voltage Vac being less than a first predetermined voltage is greater than a first predetermined period, the brown-out voltage signal luv is correspondingly generated to the control signal generating circuit 116 (such as, the brown-out voltage signal luv is asserted to the high level or the other manner), so as to enable the control signal generating circuit 116 to set the AC-DC converter 104 to perform soft start procedure. The brown-out voltage signal luv can be generated by at least one of the voltage detection circuit 112 and the timer circuit 114. For example, when the voltage detection circuit 112 detects that the AC voltage Vac is less than the first predetermined voltage, the first timer circuit 114 is set to start counting time, and when the first timer circuit 114 counts a duration of the AC voltage Vac being less than the first predetermined voltage greater than the first predetermined period, the first timer circuit 114 correspondingly generates the brown-out voltage signal luv to the control signal generating circuit 116. In the other embodiment, when the voltage detection circuit 112 detects that the AC voltage Vac is less than the first predetermined voltage, the voltage detection circuit 112 counts the duration of the AC voltage Vac being less than the first predetermined voltage according to a timing signal of the first timer circuit 114. If the duration of the AC voltage Vac being less than the first predetermined voltage is greater than the first predetermined period, the voltage detection circuit 112 correspondingly generates the brown-out voltage signal luv to the control signal generating circuit 116.

The voltage abnormal protection circuit 118 is coupled to the feedback circuit 106 and the auxiliary brown-out detection circuit 120. The voltage abnormal protection circuit 118 is configured to receive feedback signal FB1 provided by the feedback circuit 106. When the feedback signal FB1 reflects that the output voltage is abnormal, the voltage abnormal protection circuit 118 correspondingly generates the voltage abnormal signal Abn to the control signal generating circuit 116, so as to enable the control signal generating circuit 116 set the AC-DC converter 104 to perform the soft start procedure. In one embodiment, the voltage abnormal protection circuit 118 includes a comparator circuit configured to compare the feedback signal FB1 to a first reference voltage, in order to determine whether the feedback signal FB1 is less than the first reference voltage. In the other embodiment, the voltage abnormal protection circuit 118 includes two comparator circuits configured to respectively compare the feedback signal FB1 to first and second reference voltages, in order to determine whether the feedback signal FB1 is less than the first reference voltage or is higher than the second reference voltage, where the first reference voltage and the second reference voltage are lower and upper limits of a predetermined range. When the feedback signal FB1 is out of the predetermined range, the voltage abnormal protection circuit 118 is able to set the control signal generating circuit 116 to correspondingly generate the control signal CTRL, in order to set the AC-DC converter 104 to perform the soft start procedure. In one embodiment, a response time that the voltage abnormal protection circuit 118 detects the feedback signal FB1 to enable the AC-DC converter 104 to perform the soft start procedure is faster than a response time that the brown-out protection circuit 111 detects the AC voltage Vac to enable the AC-DC converter 104 to perform the soft start procedure.

In one embodiment, the control signal generating circuit 116 correspondingly generates the control signal CTRL according to the feedback signal FB2, the voltage abnormal signal Abn and the brown-out voltage signal luv, such that the AC-DC converter 104 generates the desired output voltage Vout and/or output current.

The auxiliary brown-out detection circuit 120 includes an input voltage detection circuit 121, a timer circuit 123 and a trigger signal circuit 125. The input voltage detection circuit 121 is configured to be coupled to the AC power source PWR, in order to detect whether the AC voltage Vac is less than a second predetermined voltage. The voltage detection circuit 112 can be implemented by a comparator, so as to detect whether the AC voltage Vac is less than a second predetermined voltage. The second predetermined voltage is set to be equal to or corresponds to the first predetermined voltage or the other appropriate voltage value.

The timer circuit 123 is electrically coupled to the input voltage detection circuit 121, and the timer circuit 123 can be implemented by an oscillator circuit, a counter circuit or other manner. The voltage detection circuit 112 and the timer circuit 123 can configured to calculate whether a duration of the AC voltage Vac being less than the second predetermined voltage is greater than a second predetermined period, thereby determining whether an instantaneous interruption occurs in the AC power source PWR. The said second predetermined period is less than the aforesaid first predetermined period. The second predetermined period can depend on the cycle of the AC voltage Vac. For example, when the frequency of the alternating current voltage Vac is 50 Hz or 60 Hz, the second predetermined period can be set as the time period of one cycle of the alternating current (such as, 1/50 seconds or 1/60 seconds).

The trigger signal circuit 125 is electrically coupled to the input voltage detection circuit 121 and the timer circuit 123, so as to change a signal value of the feedback signal FB1 according to the output(s) of the input voltage detection circuit 121 and/or the second timer circuit 123, thereby triggering the controller 110 to set the AC-DC converter 104 to perform the soft start function. The operation manners of the input voltage detection circuit 121 and the second timer circuit 123 can be implemented by the operation manners of the voltage detection circuit 112 and the timer circuit 114, in order to set the trigger signal circuit 125 by at least one of the input voltage detection circuit 121 and the second timer circuit 123 to change the signal value of the feedback signal FB1. For example, when a duration of the AC voltage Vac being less than the second predetermined voltage is greater than the second predetermined period, at least one of the input voltage detection circuit 121 and the second timer circuit 123 active the trigger signal circuit 125, such that the trigger signal circuit 125 correspondingly changes the signal value of the feedback signal FB1, thereby triggering the controller 110 to set the AC-DC converter 104 to perform the soft start function.

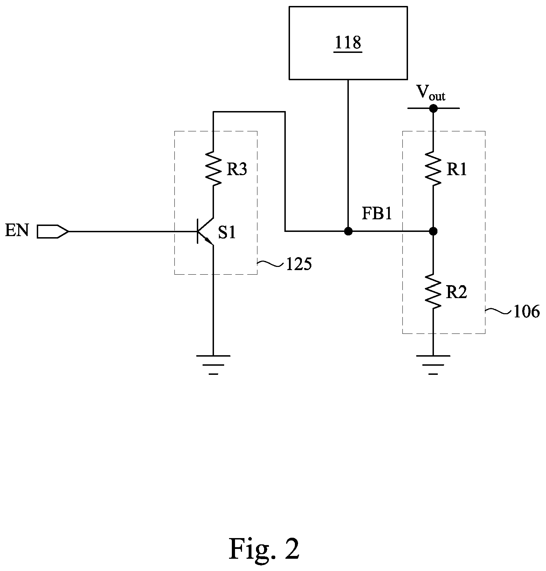

Fig. 2 depicts a schematic diagram of a portion of a power supply 100 in Fig. 1 according to an embodiment of the present disclosure. As shown in the embodiment of Fig. 2, the trigger signal circuit 125 includes a resistor R3 and a switch S1. The feedback circuit 106 includes resistors R1 and R2. The feedback circuit 106 divides the output voltage Vout through the resistors R1 and R2 to the feedback signal FB1 with appropriate voltage level.

In the embodiment of Fig. 2, when a control terminal of the switch S1 does not receive an enable signal EN, the switch S1 is in OFF state. When the duration of the AC voltage Vac being less than the second predetermined voltage is greater than the second predetermined period, at least one of the input voltage detection circuit 121 and the second timer circuit 123 correspondingly generates the enable signal EN. When the control terminal of the switch S1 receives the enable signal EN, the switch S1 is correspondingly in conduction state, such that the resistors R2 and R3 are connected in parallel, and the signal value of the feedback signal FB1 is decreased from a fraction of the output voltage Vout, Vout*R2/(R1 +R2), to the Vout*(R2//R3)/(R1 +R2//R3). When the feedback signal FB1 is out of a predetermined range of the voltage abnormal protection circuit 118, the voltage abnormal protection circuit 118 sets the control signal generating circuit 116 to generate corresponding control signal CTRL, in order to enable the AC-DC converter 104 to perform the soft start procedure.

In the aforementioned embodiments, when the instantaneous interruption occurs, the trigger signal circuit 125 rapidly changes the feedback signal FB1 to be lower than the lower limit of the predetermined range of the voltage abnormal protection circuit 118. In the other embodiments, when the instantaneous interruption occurs, the trigger signal circuit 125 rapidly changes the feedback signal FB1 to be higher than the upper limit of the predetermined range of the voltage abnormal protection circuit 118, thereby triggering the controller 110 to set the AC-DC converter 104 to perform the soft start control.

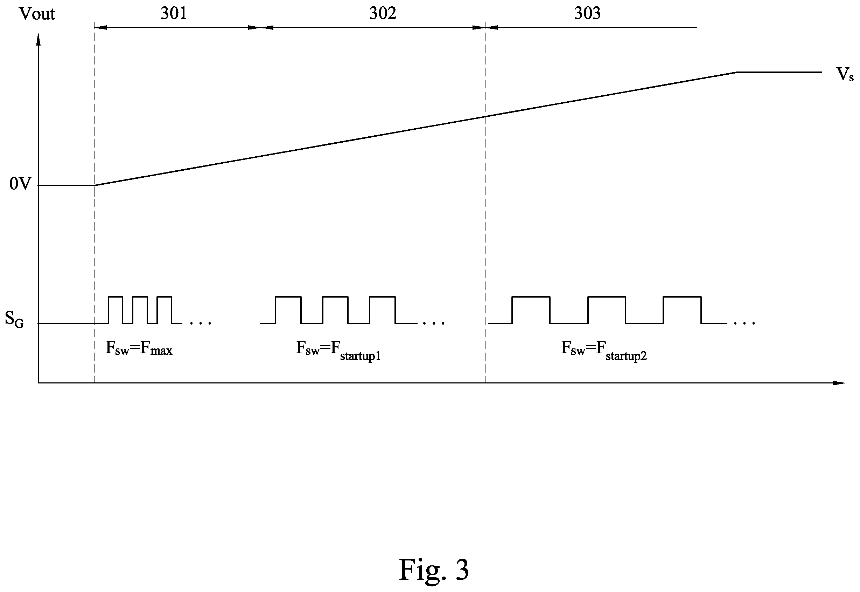

Fig. 3 depicts a schematic diagram of an output voltage Vout and a control signal CTRL under the soft start control according to some embodiments of the present disclosure. In the embodiment of Fig. 3, the control signal generating circuit 116 generates the control signal CTRL in PWM format to control the conduction state of the switch included in the AC-DC converter 104, and here only illustrates one switch control signal S_{G} of the control signal(s) CTRL, the other switch control signals of the control signal(s) CTRL can be implemented by the same or the similar manner. When the control signal generating circuit 116 set the AC-DC converter 104 to perform the soft start procedure, a frequency of the switch control signal S_{G} is set to be gradually decreased, such that the output voltage Vout is gradually increased from an initial voltage (such as, 0 volt) to the predetermined output voltage value Vs, where in time periods 301-303, a switching frequency Fsw of the switch control signal S_{G} is decreased from Fmax to a frequency Fstartup1, and further decreased to the frequency Fstartup2. Furthermore, when the control signal generating circuit 116 set the AC-DC converter 104 to perform the soft start procedure, the controller set a duty cycle of the switch control signal S_{G} to be maintained, gradually increased or gradually decreased, such that the output voltage Vout is gradually increased from the initial voltage to the predetermined output voltage value Vs, in order to avoid generating the inrush current which may damage the components included in the power supply 100. In the embodiment of Fig. 3, when the control signal generating circuit 116 sets the AC-DC converter 104 to perform the soft start procedure, the control signal generating circuit 116 set the duty cycle of the control signal to be maintained, and set the frequency of the switch control signal to be gradually decreased, such that the output voltage Vout is gradually increased from the initial voltage to the predetermined output voltage value Vs. In the other embodiment, when the control signal generating circuit 116 sets the AC-DC converter 104 to perform the soft start procedure, the control signal generating circuit 116 set the frequency of the control signal to be gradually decreased, and set the duty cycle of the switch control signal to be gradually increased, such that the output voltage Vout is gradually increased from the initial voltage to the predetermined output voltage value Vs.

In one embodiments, the brown-out protection circuit 111, the control signal generating circuit 116 and the voltage abnormal protection circuit 118 are configured in the same integrated circuit, and the auxiliary brown-out detection circuit 120 is configured outside the said integrated circuit.

Summary, the power supply 100 of the present disclosure has the AC voltage Vac and the output voltage Vout detection mechanisms, in order to perform the soft start control when a voltage abnormal condition in various types occurs. Furthermore, the power supply of the present disclosure can adapt applied environments in various types. Therefore, in areas with unstable input power, when an instantaneous interruption occurs in the AC power, the auxiliary brown-out detection circuit 120 assist the controller 110 in determining whether there is an instantaneous interruption occurs in the AC power, thereby setting the AC-DC converter 104 to perform soft start procedure, in order to avoid a load or the power converter operating in a wrong way or even failure, and to further increase the stability of the power supply 100.

## Claims

1. A power supply (100), **characterized in that**, the power supply is configured to supply power to a load (108) according to an AC power source (PWR) and comprises:
an AC-DC converter (104), configured to be coupled to the AC power source, to convert an AC voltage (Vac) to a DC voltage;
a feedback circuit (106), coupled to the AC-DC converter, to correspondingly generate a first feedback signal (FB1) according to the DC voltage;
a brown-out protection circuit (111), configured to be coupled to the AC power source;
a control signal generating circuit (116), coupled to the brown-out protection circuit and the feedback circuit, configured to set the AC-DC converter to convert the AC voltage to the DC voltage;
a voltage abnormal protection circuit (118), coupled to the feedback circuit and the control signal generating circuit; and
an auxiliary brown-out detection circuit (120), coupled to the voltage abnormal protection circuit, and configured to be coupled to the AC power source,
and wherein when the auxiliary brown-out detection circuit detects that a duration of the AC voltage being less than a second predetermined voltage is greater than a second predetermined period, the auxiliary brown-out detection circuit changes a signal value of the first feedback signal, to enable the control signal generating circuit by the voltage abnormal protection circuit to set the AC-DC converter to perform a soft start procedure.

2. The power supply of claim 1, wherein when the brown-out protection circuit detects that the duration of the AC voltage being less than a first predetermined voltage is greater than a first predetermined period, the brown-out protection circuit enables the control signal generating circuit to set the AC-DC converter to perform the soft start procedure, and wherein the second predetermined period is shorter than the first predetermined period.

3. The power supply of claim 1 or 2, wherein the auxiliary brown-out detection circuit further comprises:
an input voltage detection circuit (121), configured to be coupled to the AC power source;
a timer circuit (123), coupled to the input voltage detection circuit; and
a trigger signal circuit (125), coupled to the input voltage detection circuit and the timer circuit;
and wherein when the input voltage detection circuit and the timer circuit detect that the duration of the AC voltage being less than the second predetermined voltage is greater than the second predetermined period, the trigger signal circuit changes the signal value of the first feedback signal, to enable the control signal generating circuit by the voltage abnormal protection circuit to set the AC-DC converter to perform the soft start procedure.

4. The power supply of claim 3, wherein the feedback circuit includes a voltage divider, configured to divide the DC voltage to the first feedback signal; the trigger signal circuit includes a switch (S1) and a resistor (R3); and wherein when the input voltage detection circuit and the timer circuit detect that the duration of the AC voltage being less than the second predetermined voltage is greater than the second predetermined period, at least one of the input voltage detection circuit and the timer circuit set the switch in conduction state, such that the resistor is coupled to the voltage divider in parallel, thereby changing the signal value of the first feedback signal.

5. The power supply of any one of claims 1 to 4, wherein the control signal generating circuit generates a switch control signal (S_{G}); when the AC-DC converter performs the soft start procedure, the control signal generating circuit performs at least one of operations: gradually decrease a switching frequency (F_{SW}) of the switch control signal, and gradually increase a duty cycle of the switch control signal.

6. An operation method for a power supply (100), **characterized in that**, the power supply is configured to supply power to a load (108) according to an AC power source (PWR), and the power supply comprises an AC-DC converter (104), a feedback circuit (106), a brown-out protection circuit (111), a control signal generating circuit (116), a voltage abnormal protection circuit (118) and an auxiliary brown-out detection circuit (120), wherein the AC-DC converter is coupled to the AC power source, wherein the control signal generating circuit is coupled to the brown-out protection circuit and the feedback circuit, wherein the voltage abnormal protection circuit is coupled to the feedback circuit and the control signal generating circuit, wherein the auxiliary brown-out detection circuit is coupled to the voltage abnormal protection circuit, and wherein the operation method comprises:
setting, by the control signal generating circuit, the AC-DC converter to convert an AC voltage (Vac) to a DC voltage;
generating, by the feedback circuit, a first feedback signal (FB1), correspondingly; and
when the auxiliary brown-out detection circuit detects that a duration of the AC voltage being less than a second predetermined voltage is greater than a second predetermined period, changing a signal value of the first feedback signal, by the auxiliary brown-out detection circuit, to enable the control signal generating circuit by the voltage abnormal protection circuit to set the AC-DC converter to perform a soft start procedure.

7. The operation method of claim 6, further comprising:
when the brown-out protection circuit detects that the duration of the AC voltage being less than a first predetermined voltage is greater than a first predetermined period, enabling the control signal generating circuit, by the brown-out protection circuit, to set the AC-DC converter to perform the soft start procedure, and wherein the second predetermined period is shorter than the first predetermined period.

8. The operation method of claim 6 or 7, wherein the auxiliary brown-out detection circuit further comprises an input voltage detection circuit (121) coupled to the AC power source, a timer circuit (123) coupled to the input voltage detection circuit, a trigger signal circuit (125) coupled to the input voltage detection circuit and the timer circuit, and wherein the operation method further comprises:
when the input voltage detection circuit and the timer circuit detect that the duration of the AC voltage being less than the second predetermined voltage is greater than the second predetermined period, changing the signal value of the first feedback signal, by the trigger signal circuit, to enable the control signal generating circuit by the voltage abnormal protection circuit to set the AC-DC converter to perform the soft start procedure.

9. The operation method of claim 8, wherein the feedback circuit includes a voltage divider, wherein the trigger signal circuit includes a switch (S1) and a resistor (R3), and wherein the operation method further comprises:
dividing, by the voltage divider, the DC voltage to the first feedback signal; and
when the input voltage detection circuit and the timer circuit detect that the duration of the AC voltage being less than the second predetermined voltage is greater than the second predetermined period, setting the switch in conduction state, by at least one of the input voltage detection circuit and the timer circuit, such that the resistor is connected to the voltage divider in parallel, thereby changing the signal value of the first feedback signal.

10. The operation method of any one of claims 6 to 9, further comprising:
generating, by the control signal generating circuit, a switch control signal (S_{G}); and
when the AC-DC converter performs the soft start procedure, performing, by the control signal generating circuit, at least one of operations: gradually decreasing a switching frequency (F_{SW}) of the switch control signal, and gradually increasing a duty cycle of the switch control signal.
